(19) Europäisches Patentamt / European Patent Office / Office européen des brevets

(11) **EP 2 759 849 B1**

(12) **EUROPEAN PATENT SPECIFICATION**

(45) Date of publication and mention
of the grant of the patent:
**17.01.2018  Bulletin 2018/03**

(51) Int Cl.:
***G01S 19/44*** (2010.01)

(21) Application number: **13152931.5**

(22) Date of filing: **28.01.2013**

(54) **Method, network of reference stations and mobile navigation device for determining at least one real valued parameter of a receiver, in particular an absolute or relative position of the receiver, by means of a satellite navigation system**

Verfahren, Netzwerk von Referenzstationen und mobiles Navigationsgerät zur Bestimmung zumindest eines Realwertparameters eines Empfängers, insbesondere der absoluten oder relativen Position des Empfängers mittels eines Satellitennavigationssystems

Procédé, réseau de stations de référence et dispositif mobile de navigation pour la détermination d'au moins un paramètre réel, en particulier la position d'un récepteur par un système de navigation par satellite

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**30.07.2014  Bulletin 2014/31**

(73) Proprietor: **Technische Universität München 80333 München (DE)**

(72) Inventors:
• **Brack, Andreas 80687 München (DE)**
• **Henkel, Patrick 82275 Emmering (DE)**

(74) Representative: **Herrmann, Franz Dendorfer & Herrmann Patentanwälte Partnerschaft mbB Bayerstrasse 3 80335 München (DE)**

(56) References cited:
**WO-A2-2010/021656**

**Description**

The invention relates to a method for determining at least one real-valued parameter, in particular an absolute or relative position of a receiver, by means of a satellite navigation system comprising a plurality of satellites, which emit navigation signals on carrier signals, the method comprising the steps:

- phase measurements on the carriers of the navigation signals are performed,
- a real-valued float solution for the at least one real-valued parameter and for phase ambiguities of the phase measurements and a corresponding covariance matrix are determined,
- a sequential resolution of the phase ambiguities is performed, wherein a particular ambiguity to be resolved is mapped on a fixed ambiguity in dependency of the previously fixed ambiguities, and
- the float solution of the at least one real-valued parameter is adjusted to the fixed ambiguities.

The invention further relates to a reference station and a mobile navigation device.

Such a method is known from [6]. In a first step, disregarding the integer nature of the phase ambiguities, a float solution is determined for the real-valued parameters and phase ambiguities. In a second step, a mapping is performed, in which the float ambiguity estimate is used to compute the corresponding integer ambiguity estimate. Once the integer ambiguities are computed, the integer ambiguities are used in a third and final step to correct the float estimate of real-valued parameters. The mapping of the float ambiguity estimate on the integer ambiguity estimate is performed by using a method called ambiguity bootstrapping (= BS), in which the ambiguities are sequentially determined by a rounding operation followed by a conditioning operation of the unresolved ambiguities. The use of such a method is motivated by the desire to increase the precision of conventional global navigation satellite systems (= GNSS), whose precision can be considerably increased through the use of carrier-phase measurements, which can be tracked with millimeter accuracy, but are ambiguous. When using carrier-phase measurements in GNSS applications, the key to high precision parameter estimation (e.g., positioning), is to take into account the integer nature of the ambiguities, or when the correct integer values cannot be determined, to provide sufficiently precise estimates for the phase ambiguities.

In the past two decades, research focussing on the estimation of these integer valued ambiguities was of great interest, reaching from the theoretical concept of estimation [12] over ambiguity validation [13] to highly reliable estimation schemes [4, 5]. As the reliability of integer ambiguity estimation strongly depends on the precise knowledge of error sources like atmospheric delays or instrumental hardware biases, one usually uses double difference measurements for differential positioning, which strongly suppresses most of the error sources. However, the availability of highly precise satellite clock and orbit corrections enables the use of an absolute positioning strategy with undifferenced measurements [2], referred to as precise point positioning (= PPP). Obviously, in such an absolute positioning scheme, the above mentioned error sources are all present and have to be estimated in advance in order to adjust the GNSS measurements. For the joint estimation of satellite biases or orbit corrections, a large-scale network of reference stations with precisely know coordinates is required.

There exists a great variety of integer ambiguity estimators, reaching from a standard linear least-squares estimator, which generates a so called *float* solution, to a class of integer estimators like integer bootstrapping (= BS) [6], integer aperture estimators [13, 8], and the integer least-squares (= ILS) estimator, which minimizes the squared norm of the residuals of the linear GNSS model under the constraint of the ambiguity estimates being integer valued. A very efficient implementation of the latter scheme is given by the famous Least-Squares AMBiguity Decorrelation Adjustment (= LAMBDA) method [10]. Often, an integer valued ambiguity estimate resulting from BS or ILS is called *fixed* solution.

The class of integer estimators, like integer bootstrapping (= BS) or integer least-squares (= ILS), fixes the ambiguities to integer values, but can also decrease the precision of the estimates of the non-ambiguity parameters, if the probability of wrong fixing is not sufficiently small.

A further, very promising estimator is the best integer-equivariant (= BIE) estimator [7], which results from a joint minimization of the MSE of both integer ambiguities and real valued parameters over a more general class of estimators, which includes both float and fixed solution, and also the class of integer aperture estimators.

The BIE estimator is optimal in the sense of minimizing the mean-squared error (= MSE) of both the integer and real valued parameters, regardless of the precision of the float solution. However, like ILS, the BIE estimator comprises a search in the integer space of ambiguities, whose complexity grows exponentially with the number of ambiguities. The search in the integer space of ambiguities constitutes a major drawback of this estimator and disqualifies its use for a joint network parameter estimation with a large number of ambiguities and, therefore, for satellite bias estimation.

In order to overcome this complexity problem, a suboptimal estimation scheme based on the BIE estimator can be used. In [15], a partial BIE estimation scheme was proposed, which combines BS, BIE and float solution, and uses each of them in the respective regime, where it performs close to optimum.

Proceeding from this related art, the present invention seeks to provide a method for a joint estimation of real-valued parameters, such as biases, and of ambiguities of a GNSS, in a situation where a large number of parameters has to be determined.

This object is achieved by a method having the features of the independent claims advantageous embodiments and refinements are specified in claims dependent thereon.

In the method, a sequential resolution of the phase ambiguities is performed. The mapping of a particular ambiguity to be resolved within the sequence of ambiguities to the resolved is performed by setting the fixed ambiguity equal to a weighted sum of integer candidates for the particular ambiguity. The integer candidates are selected from a one-dimensional range around the float solution for the particular ambiguity, and the weighting coefficients are proportional to the values of a probability distribution of the float solution for the particular ambiguity at the locations of the integer candidates.

Thus, instead of performing one $n$-dimensional search in the integer space of ambiguities as in the conventional BIE method, $n$ one-dimensional searches are performed, which means that a separate BIE estimation is done for each ambiguity. Thus the complexity of the search and the computational burden is significantly reduced in comparison with conventional BIE. Numerical simulation demonstrate that the method has a close to optimal performance, similar to a conventional BIE method. That means that the method also outperforms conventional BS.

For the sequential resolution, a decomposition of the covariance matrix of the float solution can be used, wherein the inverted covariance matrix is decomposed into a product of a triangular matrix, a diagonal matrix and the transposed triangular matrix, and wherein the diagonal matrix and the triangular matrix are used for a sequential resolution of the phase ambiguities. The decomposition is usually performed in connection with an integer decorrelation.

Code measurements on the navigation signal are usually performed besides the phase measurements on the carriers of the navigation signals, and the code measurements and phase measurements are used for determining the real-valued float solution for the at least one real-valued parameter and for the phase ambiguities.

The float solution for the at least one real-valued parameter and for the phase ambiguities is generally determined by a least-square method, whose result can also be used for initializing a recursive state estimator, for instance a Kalman filter for increasing the precision of the float solution.

In most embodiments, the at least one real-valued parameter is the actual absolute or relative position of a navigation device. Besides or instead of the actual or relative position of a navigation device, the float solution can include a real-valued solution for instrumental biases of the code measurements and/or phase measurements, and/or environmental errors.

For reducing the number of unknown parameters, a number of unknown parameters is mapped to the parameters of the float solution before the float solution is determined.

Fixing a particular ambiguity affects also the resolution of the subsequent unresolved ambiguities. Therefore the float solution of the particular ambiguity to be resolved is conditioned in dependency of the previously resolved ambiguities.

The conditioning can be performed by projecting the differences between the previously resolved ambiguities and the float solution of the previously resolved ambiguities in the space of the particular ambiguity to be resolved, by summing up the contribution of each individual projection, and by correcting the float solution for the ambiguity to be resolved by the resulting sum.

The one-dimensional range and the probability distribution can be centered on the conditioned float solution of the particular ambiguity to be resolved, and the width of the probability distribution can depend on the variance of the conditioned float solution to be resolved. The probability distribution may further be assumed to be a Gaussian distribution. It should be noted that the probability distribution of the float solution is not completely known. Only the covariance matrix is known from the determination of the float solution, but the mean value of the float solution, which is the unknown integer ambiguity vector, is unknown. As an approximation, the probability distribution can therefore be centered on the conditioned float solution.

The boundaries of the one-dimensional range can depend on the variance of the conditioned float solution of the particular ambiguity to be resolved. Thus, an appropriate number of integer candidates will be taken into account in the mapping and the range of the mapping will be sufficiently large.

The integer decorrelation can be performed before the sequential resolution of the phase ambiguities by an integer preserving transformation of the ambiguities. In this case, the integer preserving transformation is chosen such, that an inverse transformation applied to the resolved ambiguities also preservers integers.

Instead of or in addition to the integer preserving transformation, the phase ambiguities to be resolved can be sorted according to their respectively associated variances, which depend on the variances of the float solutions for the phase ambiguity. The phase ambiguities will in most cases sorted such that the phase ambiguities are resolved proceeding from an ambiguity having a smaller associated variance to an ambiguity having a bigger associated variance.

The float solution of the at least one real-valued parameter is finally adjusted by correcting the float solution of the at least one real-valued parameter by a projection of the fixed ambiguities in the space of the at least one real-valued parameter.

A computational unit of a network of reference stations and a computational unit of a navigation device can be arranged for performing the method. In the network, a large number of satellite biases can be determined at a reduced computational burden. Due to the reduced requirements on the computational power, a mobile navigation device may also be capable for performing the method described herein.

Further advantages and properties of the present invention are disclosed in the following description, in which exemplary embodiments of the present invention are explained in detail based on the drawings:

Figure 1    illustrates a satellite navigation system;

Figure 2    depicts a flow diagram of the method;

Figure 3    illustrates weights of integer candidates in the low precision case;

Figure 4    illustrates weights of the integer candidates in the high precision case;

Figure 5    is a diagramm containing MSE curves of a float solution, and BS, ILS, SBIE and BIE estimates plotted agains epochs t; and

Figure 6    is a digramm showing mean standard deviations of the satellite phase-bias estimates for float solution, BS, and SBIE plotted agains epochs t.

## 1 Introduction

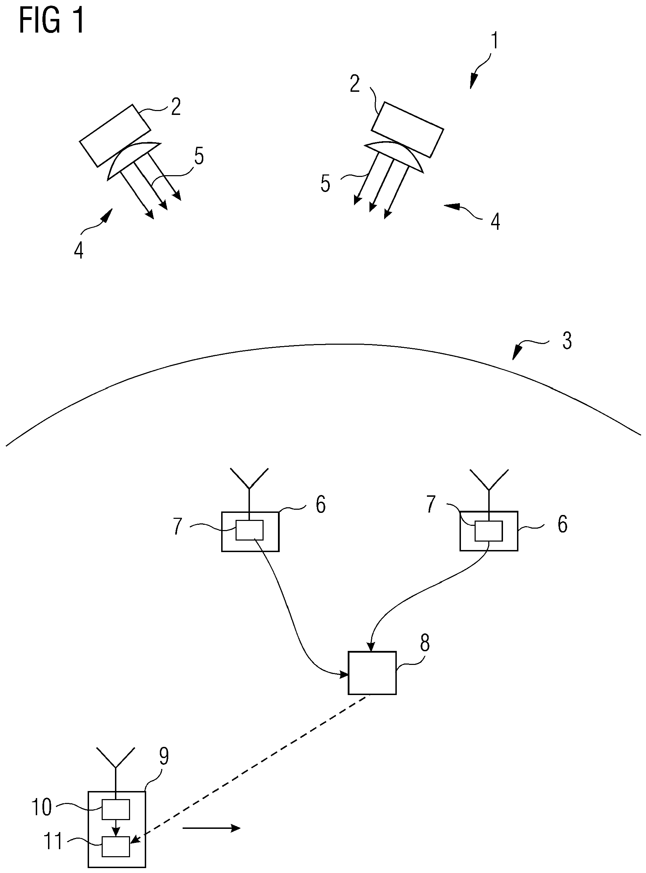

Figure 1 shows a Global Navigation Satellite System (= GNSS) 1, which comprises satellites 2, which are orbiting around the earth 3 and emit satellite signals 4, which are modulated on a number of carrier signals 5.

A plurality of stationary reference station 6 is distributed over the earth 3. The reference stations 6 are each provided with reveivers 7, for performing code measurements on the navigations signal 4 and for further perfoming phase measurements on the carrier signals 5. The measurements of the reference stations 6 are transmitted to a central processing unit 8, which uses the measurements for determining systematic instrumental errors, such as satellites biases and reveiver biases, and also uses the measurments for determining environmental errors, such as ionospheric errors or tropospheric errors. For determining these errors, the central processing unit 8 can perform the method described therein. In this case, the method will be used for determining the real-valued instrumental and environmental errors, since the positions of the reference stations 6 are already precisely known. For determining the instrumental and environmental errors the phase ambiguities have also to be resolved.

It should be noted that the central processing unit 8 can also form an integral part of one of the reference stations 6.

The navigation signal 4 can also be received by a mobile object 9, which is provided with a receiver 10 for performing code measurements on the navigation signals 4 and for performing phase measurements on the carrier signal 5. These code measurements and phase measurements are processed by a processing unit 11 of the mobile object 9. The mobile object 9 can be a mobile navigation device or a vehicle provided with navigation means.

The errors determined by the central processing unit 8 can be transmitted to the mobile object 9. The processing unit 11 can then use the code measurements on the navigation signals 4 and the phase measurements on the carrier signals 5, and the error values determined by the central processing unit 8 and transmitted to the processing unit 11 as well as the method described therein for performing a PPP, in order to determine the absolute position of the mobile object 9. In this case, the method is used for determining the absolute position of the receiver 10, the instrumental errors of the receiver 10, and the phase ambiguities, since the satellite biases, and the ionospheric and tropospheric error have already been determined by the network of reference stations 6 and are provided by the network of reference stations 6.

Alternatively the processing unit 11 can use the code measurements on the navigation signals 4 and the phase measurements on the carrier signals 5, which have been performed by the mobile object 9, the code and phase measurements, which have been performed by at least one of the reference stations 6, and the error values determined by the central processing unit 8 and transmitted to the processing unit 11 as well as the method described therein for differential positioning, in which the relative position of the mobile object 9 with respect to the at least one reference station 6 is determined based on double-differences of the code and phase measurements of the at least one reference station 6 and the mobile object 9. In this case, the method is used for determining the relative position of the receiver 10, the instrumental errors of the receiver 10, and the phase ambiguities, since the satellite biases, the ionospheric and tropospheric error have already been determined by the network of reference stations 6.

The method described herein can finally also be used for PPP based on measurements performed exclusively by the mobile object 9. In this case, the absolute position of the receiver 10 as well as all relevant instrumental and environmental errors are determined by the processing unit 11 of the mobile object 9.

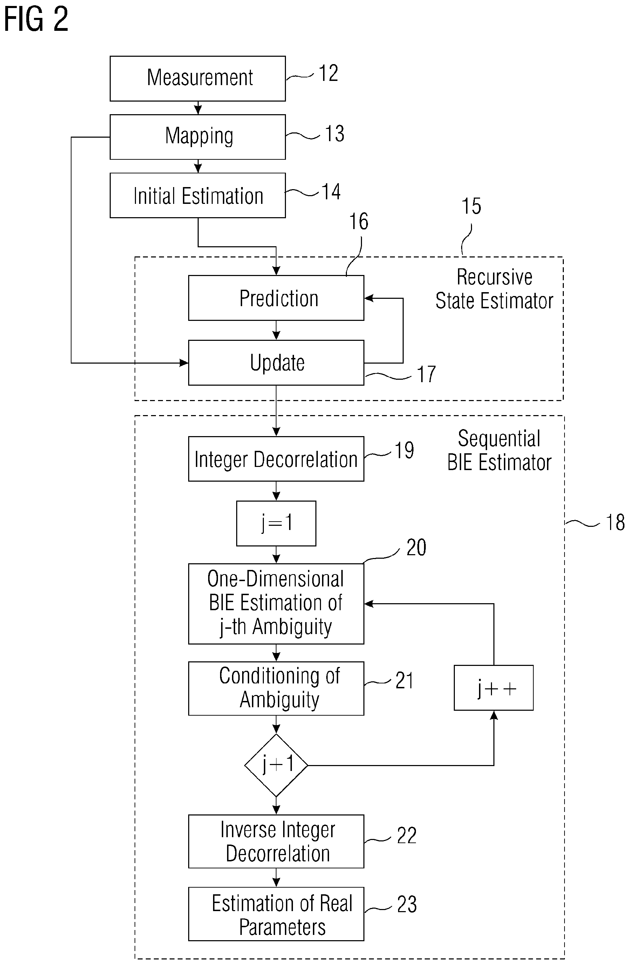

Figure 2 shows a flow diagram of the method described herein. The method starts with a measurement 12, generally a code and phase measurement. The measurement is followed by a mapping 13, in which the number of parameters is reduced. Then a real-valued float solution for at least one real-valued parameter and for the phase ambiguities is determined by a inital estimation 14, such as a least-square estimation. The initial estimation 14 may be used for initializing a recursive state estimator 15, such as a Kalman filter. Within such a recursive state estimator 15 predictions 16 based on previous measurements 12 at previous epochs are repeatedly updated by an Update 17, which compares the prediction with a current measurement 12 and refines the prediction 16. The epochs are the instants of time, at which the measurements 12 are performed. The time period between epochs is typically 10 sec. Applying the recursive state estimator on the measurements 12 of several epochs result in a float solution of the at least one real-valued parameter and the phase ambiguities.

The float solution is subjected to a Sequential Best Integer-Equivariant Estimation (= SBIE) 18. In a first step, an integer decorrelation 19 is performed. Then the ambiguities are sequentially resolved by a one-dimensional BIE estimation 20. In the one-dimensional BIE estimation 20, the ambiguity to be determined is fixed based on a mapping. In this mapping the ambiguity, which has to be determined, is set euqal to a weighted sum of integer candidates from a one-dimensional range around the float solution for the particular ambiguity to be resolved. The one-dimensional BIE estimation 20 is followed by a conditioning 21, in which the float solutions and the boundaries for the ambiguities, which must subsequently be determined, are adapted to the already fixed ambiguities. The BIE estimation 20 and the conditioning 21 are repeated until all ambiguities, which have to be fixed, are actually resolved.

The fixed ambiguities are then subjected to an inverse integer decorrelation 22. Finally an estimation 23 of the real-valued parameters is performed.

## 2 GNSS Parameter Estimation

In principle, all GNSS problems (e.g., positioning or the estimation of code- and phase-biases) that include carrier-phase and, optionally, also code measurements or combinations thereof, can be cast as a system of linear equations in the form

$$\mathbf{\Psi} = \mathbf{H_N N} + \mathbf{H_\xi \xi} + \mathbf{\eta_\Psi}, \qquad\qquad (1)$$

where $\mathbf{\Psi} \in \mathbb{R}^q$ is the measurement vector, which contains undifferenced measurements, single- or double-difference combinations. The vectors $\mathbf{N} \in \mathbb{Z}^n$ and $\mathbf{\xi} \in \mathbb{R}^p$ denote the unknown integer ambiguities and real valued parameters, respectively, and the corresponding matrices $\mathbf{H_N} \in \mathbb{R}^{q \times n}$ and $\mathbf{H_\xi} \in \mathbb{R}^{q \times p}$ represent the linear system model. Finally, $\mathbf{\eta_\Psi} \in \mathbb{R}^q$ is an additive Gaussian noise with zero mean and covariance matrix $\mathbf{Q_{\eta_\Psi}} \in \mathbb{R}^{q \times q}$.

### 2.1 Best Integer-Equivariant Estimation

The method described herein used the class of integer-equivaraint estimators. The class of integer-equivariant estimators is characterized by the integer remove-restore property, i.e., if the measurements are perturbed by an arbitrary number of cycles $\mathbf{H_N z}$, $\forall \mathbf{z} \in \mathbb{Z}^n$, the solution for the ambiguity estimate is shifted by **z**. Likewise a perturbation by $\mathbf{H_\xi \xi}$, $\forall \mathbf{\xi} \in \mathbb{R}^p$, results in a shift of the real valued parameter vector by $\xi$, while the integer part is not affected. It can easily be shown, that all linear unbiased estimators fulfill this property [11], which makes the float estimator part of this class. Furthermore, admissible integer estimators [12] like BS or ILS are also part of this class by definition. Minimizing the MSE over the class of integer-equivariant estimators thus leads to an estimator (the BIE estimator) with at least equal performance compared to both the float and fixed solution [14].

From the definiton of the MSE criterion in [7] it follows, that the BIE estimator not only minimizes the mean-squared error in the Euclidean sense, but also in the metric of an arbitrary covariance matrix. Hence, the BIE estimates for ambiguities and real valued parameters are given by

$$\begin{bmatrix} \breve{\mathbf{N}}_{\mathrm{BIE}} \\ \breve{\boldsymbol{\xi}}_{\mathrm{BIE}} \end{bmatrix} = \arg\min_{\breve{\mathbf{N}},\breve{\boldsymbol{\xi}}} \mathrm{E}\left[ \left\| \begin{bmatrix} \breve{\mathbf{N}} \\ \breve{\boldsymbol{\xi}} \end{bmatrix} - \begin{bmatrix} \mathbf{N} \\ \boldsymbol{\xi} \end{bmatrix} \right\|_{\mathbf{Q}^{-1}}^{2} \right],$$

$$\text{s.t.} \quad \mathbf{Q} \in \mathbb{R}^{(n+p)\times(n+p)}, \mathbf{Q} \succeq \mathbf{0}, \tag{2}$$

where $\succeq$ is defined is the sense of positive semi-defineteness, and the estimates $\breve{\mathbf{N}}$ and $\breve{\boldsymbol{\xi}}$ result from an integer-equivariant estimator.

Although the BIE estimator can be derived for an arbitrary noise contribution $\eta_\Psi$ in (1) [11], we restrict ourselves to Gaussian noise in this work. That being the case, the BIE estimator follows the three-step procedure, which is well known from integer (aperture) estimators [12, 13, 10]:

**First Step:**

The integer property of the ambiguities **N** is discarded, i.e., a standard linear weighted least-squares adjustment is performed, which leads to the unbiased, Gaussian distributed float solutions $\hat{\mathbf{N}}$ and $\hat{\boldsymbol{\xi}}$ with the respective covariance matrices $\mathbf{Q}_{\hat{\mathbf{N}}} \in \mathbb{R}^{n\times n}$ and $\mathbf{Q}_{\hat{\boldsymbol{\xi}}} \in \mathbb{R}^{p\times p}$, and cross-covariance matrix $\mathbf{Q}_{\hat{\boldsymbol{\xi}},\hat{\mathbf{N}}} \in \mathbb{R}^{p\times n}$.

**Second Step:**

A mapping is introduced, that allocates to each $\hat{\mathbf{N}}$ the BIE ambiguity solution $\breve{\mathbf{N}}_{\mathrm{BIE}}$. Note that the resulting $\breve{\mathbf{N}}_{\mathrm{BIE}}$ is real-valued. In cases of a low success rate for estimating the integer ambiguity, the real-valued BIE ambiguity solution is a better estimation than any integer ambiguity estimation.

**Third Step:**

This ambiguity estimate is then used to adjust the float solution of the real valued parameters $\xi$ in a least-squares sense, i.e.,

$$\breve{\boldsymbol{\xi}}_{\mathrm{BIE}} = \hat{\boldsymbol{\xi}} \ - \mathbf{Q}_{\hat{\boldsymbol{\xi}}\hat{\mathbf{N}}}\mathbf{Q}_{\hat{\mathbf{N}}}^{-1}\left( \hat{\mathbf{N}} - \breve{\mathbf{N}}_{\mathrm{BIE}} \right). \tag{3}$$

Note that in (6) the differences between the fixed ambiguities $\breve{\mathbf{N}}_{\mathrm{BIE}}$ and the float solution $\hat{\mathbf{N}}$ are projected in the space of the real-valued parameters and that the real parameters are corrected by the projected difference.

The crucial point in the above procedure is the second step, which is given by

$$\breve{\mathbf{N}}_{\mathrm{BIE}} = \sum_{\mathbf{z}\in\mathbb{Z}^{n}} \mathbf{z}w_{\mathbf{z}}\left( \hat{\mathbf{N}} \right) \ \text{with} \ \sum_{\mathbf{z}\in\mathbb{Z}^{n}} w_{z}\left( \hat{\mathbf{N}} \right) = 1, \tag{4}$$

i.e., the BIE ambiguity solution $N_{\mathrm{BIE}}$ is a weighted sum of all vectors in the n -dimensional space of integers. The weighting coefficients in (4) are computed as

$$w_{\mathbf{z}}\left( \hat{\mathbf{N}} \right) = \frac{\exp\left( -\frac{1}{2}\left\| \hat{\mathbf{N}} - \mathbf{z} \right\|_{\mathbf{Q}_{\hat{\mathbf{N}}}^{-1}}^{2} \right)}{\sum\limits_{\mathbf{z}'\in\mathbb{Z}^{n}} \exp\left( -\frac{1}{2}\left\| \hat{\mathbf{N}} - \mathbf{z}' \right\|_{\mathbf{Q}_{\hat{\mathbf{N}}^{-1}}}^{2} \right)}. \tag{5}$$

Because of the infinite sums in (4) and (5), the computation of the true BIE ambiguity estimates is not feasible. As a consequence, the sums are constrained to the set $\mathbf{\Theta}_{\hat{\mathbf{N}}}^{d}$, which contains all integer vectors within an ellipsoidal region around the float solution $\hat{\mathbf{N}}$ with radius d defined in the metric of the covariance matrix $\mathbf{Q}_{\hat{\mathbf{N}}}$. This choice preserves the integer-equivariance property of the estimator. The size of the search space is set according to a probabilistic criterion in [9], which is possible through exploiting the fact, that $\| \hat{\mathbf{N}} - \mathbf{N} \|_{\mathbf{Q}_{\hat{\mathbf{N}}}^{-1}}^{2}$ follows a central $\chi^2$ distribution with $n$ degrees of freedom. Obviously, if the probability of $\hat{\mathbf{N}}$ lying within the volume of $\mathbf{\Theta}_{\hat{\mathbf{N}}}^{d}$ is fixed, the radius $d$ and, therefore, the number of integer candidates gets smaller for increasing precision of the float solution. In order to enable an efficient search of the integer candidates within $\mathbf{\Theta}_{\hat{\mathbf{N}}}^{d}$, some methods from the LAMBDA algorithm, namely the prior integer decorrelation and the triangularization of the covariance matrix $\mathbf{Q}_{\hat{\mathbf{N}}}$, which allows for a recursive tree-search formulation [10, 3], can be adapted. For a low complexity implementation, which it is aimed at in the method described herein, the functional decorrelation in [1] can be used as an alternative to the iterative $\mathbf{Z}$ transformation of the LAMBDA method.

### 2.2 Sequential Best Integer-Equivariant Estimation

Although the integer decorrelation and tree-search reformulation dramatically reduce the complexity of finding the integer candidates within the search space $\mathbf{\Theta}_{\hat{\mathbf{N}}}^{d}$, the complexity of the search itself still grows exponentially with the number of ambiguities $n$.

The method described herein offers a suboptimal, but from a computational point of view less demanding approach, which combines the optimal BIE estimator with a sequential processing strategy, similar to the bootstrapping (= BS) method [6]. Instead of performing one $n$-dimensional search in the integer space of ambiguities, $n$ one-dimensional searches are performed, i.e., a separate BIE estimation is done for each ambiguity. Note, that only the second step of the three-step framework is affected.

Like in BS, the BSIE solution can be determined sequentially, since for a Z to be determined:

$$\left\| \hat{\mathbf{N}} - \mathbf{Z} \right\|_{\mathbf{Q}_{\hat{\mathbf{N}}}^{-1}}^{2} = \left[ (\hat{\mathbf{N}} - \mathbf{Z})^{T} \mathbf{Q}_{\hat{\mathbf{N}}}^{-1} (\hat{\mathbf{N}} - \mathbf{Z}) \right] \tag{6}$$

The correlation matrix $\mathbf{Q}_{\hat{\mathbf{N}}}^{-1}$ can be decomposed into a triangular matrix L, a diagonal matrix D, and the transposed triangular matrix:

$$\mathbf{Q}_{\hat{\mathbf{N}}} = \mathbf{L}^{\mathrm{T}} \mathbf{D} \mathbf{L} \tag{7}$$

This decomposition can be the result of an integer decorrelation [6]. Thus equation (6) can be written as:

$$(\hat{\mathbf{N}} - \mathbf{Z})^{T} (L^{T})^{-1} D^{-1/2} D^{-1/2} L^{-1} (\hat{\mathbf{N}} - \mathbf{Z}) = \left\| D^{-1/2} L^{-1/2} (\hat{\mathbf{N}} - \mathbf{Z}) \right\|_{2}^{2} \tag{8}$$

Since the inverted triangular matrix is also a triangular matrix, as in the BS method, the ambiguities can be sequentially estimated, starting with the first ambiguity and conditioning each ambiguity on the ones, that have already been estimated. The $j$-th conditioned ambiguity is given by

$$\hat{N}_{j|\mathcal{J}} = \hat{N}_j - \sum_{l=1}^{j-1} \sigma_{\hat{N}_j \hat{N}_{l|\mathcal{L}}} \sigma_{\hat{N}_l}^{-2} \left( \hat{N}_{l|\mathcal{L}} - \breve{N}_{l,\mathrm{SBIE}} \right),$$

$$\forall j \in \{1, \ldots, n\}, \tag{9}$$

where $\sigma_{\hat{N}_j \hat{N}_{l|\mathcal{L}}}$ denotes the covariance between $\hat{N}_j$ and $\hat{N}_{l|\mathcal{L}}$, $\sigma_{\hat{N}_l}^2$ is the variance of $\hat{N}_l$, the set

$$\mathcal{J} = \{1, \ldots, j-1\}$$

for $j > 0$ and

$$\mathcal{J} = \varnothing$$

for $j = 0$, and the set $\mathcal{L}$ is defined accordingly. The variances and covariances are accessible from the **L$^{\mathsf{T}}$DL** decomposition of $\mathbf{Q}_{\hat{N}}$ [6], which is already available from the integer decorrelation.

Note that, according to (9), the conditioning is performed by projecting the differences between the previously resolved ambiguities $\breve{N}_{l,\mathrm{SBIE}}$ and the float solution $\hat{N}_{l|\mathcal{L}}$ of the previously resolved ambiguities in the space of the particular ambiguity $\hat{N}_{j|\mathcal{J}}$ to be resolved, by summing up the contribution of each individual projections, and by correcting the float solution $\hat{N}_j$ for the ambiguity to be resolved by the resulting sum.

It should further be noted that instead of or in addition to the integer decorrelation, the phase ambiguities to be resolved can be sorted according to their respectively associated variances, which depend on the variances of the float solutions $\hat{N}_j$ for the phase ambiguity. The phase ambiguities will in most cases sorted such that the phase ambiguities are resolved proceeding from an ambiguity having a smaller associated variance to an ambiguity having a bigger associated variance, so that the most reliable estimates are performed first.

The final SBIE ambiguity estimates, also required for (9) itself, are computed from (4) and (5), adjusted to the one-dimensional case, from the conditional float ambiguity estimates $\hat{N}_{l|\mathcal{L}}$ with variance $\sigma_{\hat{N}_{l|\mathcal{L}}}^2$ for all $l \in \{1, \ldots, n\}$, as

$$\breve{N}_{l,\mathrm{SBIE}} = \sum_{z \in \Theta_{\hat{N}_{l|\mathcal{L}}}^d} z w_z \left( \hat{N}_{l|\mathcal{L}} \right). \tag{10}$$

In contrast to the multivariate case, the search for the integer candidates itself is a trivial task in one-dimensional space, as one simply has to find all scalar integers within a given interval

$$\Theta_{\hat{N}_{l|\mathcal{L}}}^d = z \in \left[ \hat{N}_{l|\mathcal{L}} - d\sigma_{\hat{N}_{l|\mathcal{L}}}, \hat{N}_{l|\mathcal{L}} + d\sigma_{\hat{N}_{l|\mathcal{L}}} \right], \quad \text{s.t.} \quad z \in \mathbb{Z}. \tag{11}$$

The normalized size of the search interval d does not depend on the variance of the conditioned float solution and -- as already mentioned -- can be derived from the probabilistic criterion

$$\Pr\left( \frac{\left| N_l - \hat{N}_{l|\mathcal{L}} \right|^2}{\sigma_{\hat{N}_{l|\mathcal{L}}}^2} \leq d^2 \right) = 1 - \varepsilon \tag{12}$$

for a fixed value of $\varepsilon$, as $\left| N_l - \hat{N}_{l|\mathcal{L}} \right|^2 / \sigma^2_{\hat{N}_{l|\mathcal{L}}}$ follows a central $\chi^2$ distribution with one degree of freedom, if the randomness of $\breve{N}_{j,\text{SBIE}}$ is neglected $\forall j \in \mathcal{L}$.

After the sequential estimation, the ambiguities are stacked into a vector

$$\mathbf{N}_{\text{SBIE}} = \left[ \breve{N}_{1,\text{SBIE}}, \ldots, \breve{N}_{n,\text{SBIE}} \right]^{\text{T}}, \qquad (13)$$

which is then used to adjust the float solution of the real valued parameters $\hat{\xi}$ according to the third step of the three-step framework.

Obviously, this SBIE estimation allows for a complexity reduction from exponential order for the true BIE estimator to linear order. Therefore, the complexity of SBIE is comparable to the one of the BS algorithm, and, coming along with that, also much lower than the one of ILS. The loss of performance resulting from the suboptimality is to be numerically evaluated in Section 4.

Note, that the resulting SBIE ambiguity estimates are not unique, but depend on the ordering of the (decorrelated) ambiguities. In the simulations below, the order is chosen such, that the precision of the float ambiguity estimates "decreases" with increasing index, i.e., in each step the ambiguity with the float solution showing the smallest conditional variance is chosen next.

### 2.3 Optimality of SBIE

Despite its general suboptimality, there exist three cases, in which the SBIE estimator is equal to or converges to the MSE optimal BIE solution.

### 2.3.1 The covariance matrix $\mathbf{Q}_{\hat{\mathbf{N}}}$ is diagonal

In that case the SBIE algorithm can be shown to be equivalent to the true BIE algorithm. As the single ambiguities are uncorrelated, the sequential estimation of the ambiguities gets a *separate* estimation, which should be intuitive to be optimal. This property represents a further motivation for a prior integer decorrelation, which diagonalizes $\mathbf{Q}_{\hat{\mathbf{N}}}$ as far as possible.

### 2.3.2 The float solution N shows very low precision

The integer grid is very dense compared to the probability density of the float solution $\hat{\mathbf{N}}$. Therefore, in the limit case, for each ambiguity there exists an integer larger than the float solution corresponding to each integer smaller than the float solution with the same distance to $\hat{N}_{l|\mathcal{L}}$, which average to the (conditioned) float solution itself, which is MSE optimal in that regime [11].

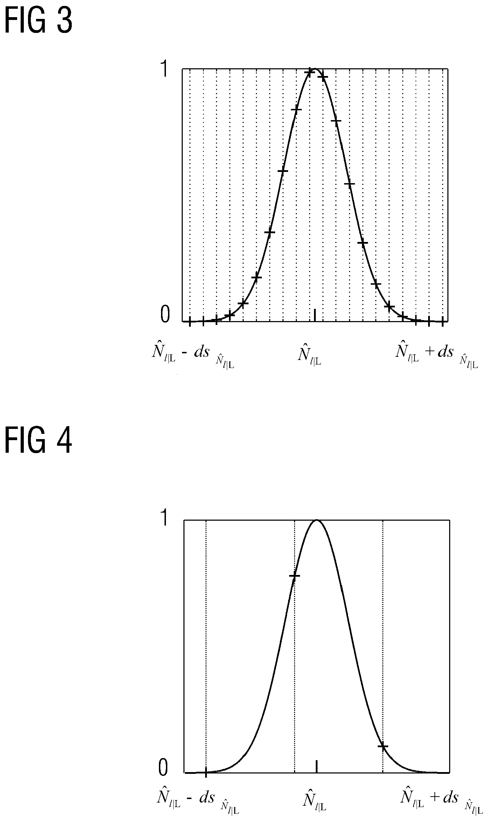

This can also be regonized from Figure 3, which shows the weights of the integer candidates (dotted lines), which are directly proportional to the value of the Gauss-curve centered around the float solution. Figure 3 illustrates the case for low precision. We can see, that for low precision there is always a pair of candidates with approximately the same weights averaging to the float solution itself.

### 2.3.3 The float solution $\hat{\mathbf{N}}$ shows very high precision

The probability density of the float solution $\hat{\mathbf{N}}$ is very peaked compared to the integer grid, which causes a SBIE solution, that automatically converges to the BS solution, as the weighting coefficients in (10) approach binary values. For vanishing probability of wrong fixing, i.e., in the high precision regime, the BS solution is also MSE optimal.

This can also be recognized from Figure 4, which corresponds to Figure 3, but illustrates the situation for high precision. In this case, the weights approach binary values.

The optimality of SBIE for these three cases is proven analytically in the Appendix.

### 3 Simulation Setup

### 3.1 GNSS System Model

Assuming, that the hardware biases of the GNSS measurements are not link dependent, but can rather be modeled as a sum of satellite and receiver specific biases, the absolute code- $\rho_{r,m}^{k}(t)$ and carrier-phase $\lambda_{m}\varphi_{r,m}^{k}(t)$ measurements at time $t$ for satellite $k$ and user $r$ on frequency m with wavelength $\lambda_{m}$ can be modeled as [4]

$$\rho_{r,m}^{k}(t) = g_{r,m}^{k}(t) + q_{1m}^{2} I_{r}^{k}(t) + b_{r,m} + b_{m}^{k} + \eta_{r,m}^{k}(t)$$

$$\lambda_{m}\varphi_{r,m}^{k}(t) = g_{r,m}^{k}(t) - q_{1m}^{2} I_{r}^{k}(t) + \beta_{r,m} + \beta_{m}^{k}$$

$$+ \lambda_{m} N_{r,m}^{k} + \varepsilon_{r,m}^{k}(t). \tag{14}$$

The ionospheric slant delay (phase advance) on the first frequency is denoted by $I_{r}^{k}(t)$ and used with scaling factor $q_{1m} = f_{1} / f_{m}$ for frequency $m$. The constant code- and phase-biases on each frequency are given by $b_{r,m}$, $b_{m}^{k}$, $\beta_{r,m}$ and $\beta_{m}^{k}$ for receivers and satellites, respectively, and the integer ambiguities for each link are $N_{r,m}^{k}$. The additive noise contributions $\eta_{r,m}^{k}(t)$ and $\varepsilon_{r,m}^{k}(t)$ for code- and carrier-phase measurements are modeled as zero mean white Gaussian processes, i.e., a possible multipath effect is already corrrected for [16].

The geometry terms $g_{r,m}^{k}(t)$ can further be rewritten as

$$g_{r,m}^{k}(t) = \mathbf{e}_{r}^{k,\mathrm{T}}(t)\left(\mathbf{x}_{r}(t) - \mathbf{x}_{r}^{k}(t)\right) + c\left(\delta\tau_{r}(t) - \delta\tau_{r}^{k}(t)\right)$$

$$+ M\left(E_{r}^{k}(t)\right) T_{\mathrm{z},r}(t), \tag{15}$$

with $\mathbf{e}_{r}^{k}(t) \in \mathbb{R}^{3}$ being a unit vector pointing from satellite $k$ to receiver $r$, $\mathbf{x}_{r}(t) \in \mathbb{R}^{3}$ the receiver position at the time of reception $t$, and $\mathbf{x}_{r}^{k}(t) \in \mathbb{R}^{3}$ the satellite position at the *time of transmission* to receiver $r$. Furthermore, the clock offsets of receiver and satellite are denoted by $\delta\tau_{r}(t)$ and $\delta\tau_{r}^{k}(t)$ at the time of reception and transmission, respectively, and the tropospheric delay is modeled as the product of the zenith delay $T_{\mathrm{z},r}(t)$ at receiver $r$ and the mapping function $M\left(E_{r}^{k}(t)\right)$ depending on the elevation angle $E_{r}^{k}(t)$ between satellite $k$ and user $r$.

Further effects like phase-wind-up and phase-center variations are assumed to be completely compensated for in advance.

### 3.2 Parameter Mappings

A joint estimation of all hardware biases, ambiguities, clock offsets and atmospheric errors is not feasible due to the rank deficiency of the system of equations (14). Therefore, the three-step parameter mapping strategy from [17] is applied before the parameter estimation. Firstly, the code-biases $b_{r,m}$ and $b_{m}^{k}$ are equivalently rewritten as a frequency dependent and a frequency independent component for each receiver and satellite, where the former ones are treated as virtual additional ionospheric delays and the latter ones as additional clock offsets.

In the second step, one of the satellites is chosen as a reference satellite. The phase bias of that satellite is absorbed in the receiver phase-biases $\beta_{r,m}$, and all satellite phase-biases $\beta_m^k$ are only estimated as the offset to the bias of that reference satellite. The same strategy is applied to the receiver and satellite clock errors $\delta\tau_r(t)$ and $\delta\tau_r^k(t)$.

As a last step, the linear dependencies between the remaining phase-biases and the integer ambiguities $N_{r,m}^k$ are removed via a Gaussian elimination. Thereby, one set of ambiguities is mapped to the phase-biases and becomes real valued, while a second set of ambiguities is exclusively mapped to other ambiguities, which preserves the integer property.

After all parameter mappings the system model (14) can be written in the form of (1), and the presented three-step framework can be applied, either with BS, ILS, BIE or SBIE.

### 3.3 Estimation Strategy

Besides the measurement model (14), the temporal evolution of the parameters in the state vector can be modeled as a Gauss-Markov process with white Gaussian process noise. Apparently, for all constant parameters, like biases and integer ambiguities, no noise is present. After a least-squares initialization the MSE-optimal estimates can be computed recursively with a Kalman filter, which minimizes the MSE for the class of linear estimators. Based on the Gaussian distributed estimates resulting from the update-step of the Kalman filter, further, non-linear estimators like SBIE can be applied, i.e., the outcome of the Kalman filter serves as the float solution of the three-step framework of Section 2. As the BIE (and also SBIE) estimates do not follow a Gaussian distribution, a feedback-loop to the Kalman filter cannot be set up to fasten the convergence.

The great advantage of using a Kalman filter for evaluating the performance of the SBIE estimator compared to other schemes is, that it offers a wide range of precision characteristics of the float solution, starting with very low precision and ending up at very high precision after sufficient convergence. Thus, evaluating the performance of the different estimators as a function of the epochs of the Kalman filter also allows for an interpretation of the performance depending on the precision of the float solution.

### 4 Numerical Results

For all simulations, pseudorange and carrier-phase measurements on the two frequencies $f_1 = 154 \cdot 10.23\text{MHz}$ and $f_2 = 120 \cdot 10.23\text{MHz}$ are modeled, where the measurement noise is chosen as $\sigma_\rho = 1\text{m}$ and $\sigma_\varphi = 2\text{cm}$, respectively. The time interval between two subsequent epochs is chosen as $\Delta t = 1\text{s}$.

### 4.1 Small Network MSE Evaluation

A small toy-example with only $R = 2$ reference stations, each having a line of sight connection to $K = 6$ satellites is considered. After the parameter mappings this results in $n = 10$ ambiguities and $p = 35$ real valued parameters, which also allows for applying the two search-based estimators, namely BIE and ILS, due to the small number of ambiguities. The performance of the different estimation schemes is compared via the weighted MSE

$$\text{MSE}_{\{F,BS,ILS,SBIE,BIE\}}(t) = E\left[\left\|\begin{bmatrix}\tilde{\mathbf{N}}(t)\\\tilde{\xi}(t)\end{bmatrix} - \begin{bmatrix}\mathbf{N}\\\xi(t)\end{bmatrix}\right\|_{\mathbf{Q}_F^{-1}(t)}^2\right]$$

$$\text{with}\quad \mathbf{N}(t) \in \left\{\hat{\mathbf{N}}(t), \breve{\mathbf{N}}_{\{BS,ILS,SBIE,BIE\}}(t)\right\},$$

$$\text{and}\quad \tilde{\xi}(t) \in \left\{\hat{\xi}(t), \breve{\xi}_{\{BS,ILS,SBIE,BIE\}}(t)\right\}, \tag{16}$$

where $\mathbf{Q}_{\mathrm{F}}(t) \in \mathbb{R}^{(n+p)\times(n+p)}$ is the covariance matrix of the float solution at time $t$. By definition, the MSE of the float solution is constant with the number of unknowns

$$\mathrm{MSE}_{\mathrm{F}}(t) = n + p. \qquad (17)$$

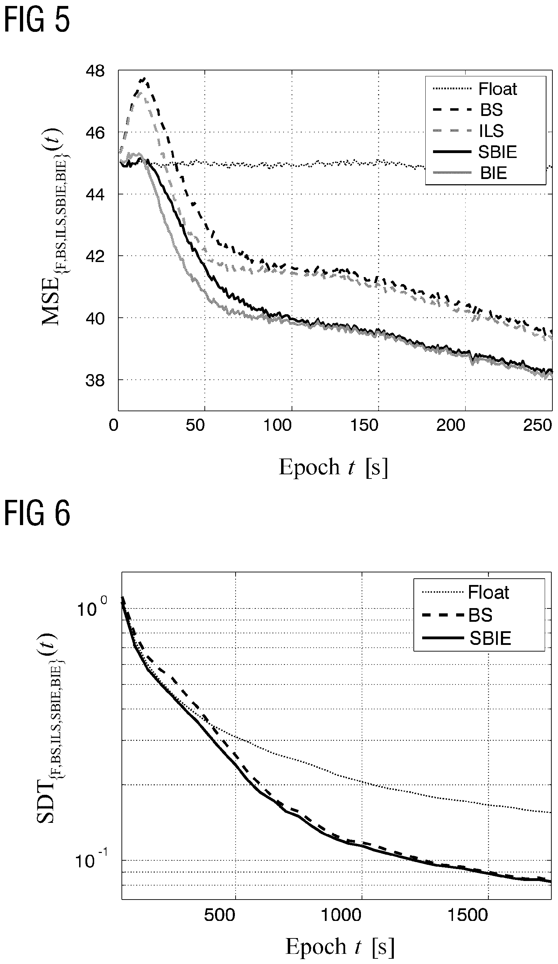

The MSE curves resulting from Monte-Carlo simulations with $10^4$ realizations are plotted against epochs in Figure 5. Due to the high probability of wrong fixing, the performance of ILS and BS is worse compared to the float solution in the first epochs, but will converge to the optimal BIE solution with vanishing probability of wrong fixing (not depicted here). The increase of the MSE in the first epochs can be ascribed to the weighting with the inverse covariance matrix with decreasing variances. By definition, the BIE solution is optimal, though it appears to be worse than the float solution at very low precision, which is caused by the sloppy approximation of the ambiguity estimate $\breve{\mathbf{N}}_{\mathrm{BIE}}$ in that regime (not critical for higher precision, where a smaller number of candidates is required). As already stated, the SBIE estimator shows (quasi-) optimal performance for low and high precision. The only penalty appears -- as expected -- in between these two cases, yet it is small enough, that SBIE is still superior to ILS. Note, that approximating the SBIE ambiguity estimates in the first epochs is much easier and, thus, can be done more precisely than the approximation of the BIE ambiguity estimates.

### 4.2 Satellite Phase-Bias Estimation

A global network of $R$ = 20 reference stations is considered for satellite bias estimation, and the satellite constellation is assumed to follow a Walker 27/3/1 constellation, i.e., the Galileo setup. The elevation mask is set to 5deg, and Niell's model [18] is used for modeling tropospheric slant delays. Compared to the previous toy-example, satellite orbit errors and error rates are included in the parameter vector, which are described in the RIC coordinate frame (radial, in-track, and cross-track) [16], and follow Newton's laws of motion. For the simulated time span of 30min , a total number of ambiguities $n$ = 228 is reached, considering only those satellites at each receiver, which are visible over the whole period. Therefore, ILS and BIE are excluded in the analysis, as their respective searches are too complex.

As the float solution as well as BS and SBIE are unbiased estimators, their performance can be compared using the mean (with respect to different satellites and frequencies) standard deviation of the satellite phase-bias estimates

$$\mathrm{STD}^2_{\{\mathrm{F,BS,SBIE}\}}(t) = \mathrm{E}_{k,m}\left[ \left( \tilde{\beta}^k_m(t) - \beta^k_m \right)^2 \right]$$

$$\text{with} \quad \tilde{\beta}^k_m(t) \in \left\{ \hat{\beta}^k_m(t), \breve{\beta}^k_{m,\{\mathrm{BS,SBIE}\}}(t) \right\}. \qquad (18)$$

One obvious result from Figure 6 is, that by somehow taking into consideration the integer nature of the ambiguities, the accuracy of the float bias estimates can be considerably improved, if the precision of the float solution itself is not too low. A great advantage of SBIE (and also BIE) is, that one does not have to think about which ambiguities to fix or when to fix a certain ambiguity, and setting up some decision criterion, as SBIE automatically converges to the respective best solution.

### 5 Advantages

A novel GNSS parameter estimation scheme was proposed, which combines the MSE-optimal BIE estimator with the sequential estimation strategy known from BS. Thereby, the complexity was reduced from exponential to linear order, as the computationally demanding search operation was replaced by trivial, one-dimensional searches. In numerical simulations the close to optimum performance of SBIE was proven true. These properties not only provide for an applicability in large-scale networks, but also for applications, which require low complexity, such as in smartphones, automobile or maritime devices for carrier-phase based positioning.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, or groups described in conjunction with a particular aspect, embodiment or example of the invention are to be understood to be applicable to any other aspect, embodiment or example described herein unless incompatible therewith.

**Appendix**

**Proof**

SBIE is optimal for $Q_N$ diagonal: the exponential function in the computation of the BIE ambiguity estimate (5) can be split to

$$\exp\left(-\frac{1}{2}\left\|\hat{\mathbf{N}} - \mathbf{z}\right\|^2_{Q_N^{-1}}\right) = \prod_{l=1}^{n} \exp\left(-\frac{1}{2\sigma_{\hat{N}_l}^2}\left(\hat{N}_l - z_l\right)^2\right)$$

$$= \prod_{l=1}^{n} e_l\left(z_l\right), \tag{19}$$

which is a product of factors $e_l(z_l)$ only depending on the $l$ th ambiguity. Hence, the BIE estimate for the $j$ th ambiguity according to (4), (5) and (19) is given by

$$\breve{N}_{j,\text{BIE}} = \sum_{z \in \mathbb{Z}^n} z_j \frac{\prod_{l=1}^{n} e_l\left(z_l\right)}{\sum_{z' \in \mathbb{Z}^n} \prod_{l=1}^{n} e_l\left(z_{l'}\right)}$$

$$= \frac{1}{\sum_{z' \in \mathbb{Z}^n} \prod_{l=1}^{n} e_l\left(z_{l'}\right)} \cdot \sum_{z \setminus z_j \in \mathbb{Z}^{n-1}} \prod_{\substack{l=1 \\ l \neq j}}^{n} e_l\left(z_l\right) \sum_{z_j \in \mathbb{Z}} z_j e_j\left(z_j\right)$$

$$= \sum_{z_j \in \mathbb{Z}} z_j \frac{e_j\left(z_j\right)}{\sum_{z_{j'} \in \mathbb{Z}} e_j\left(z_{j'}\right)}, \tag{20}$$

which corresponds to a separate estimation of all ambiguities with a one-dimensional BIE estimator, which is again equal to the SBIE estimator for uncorrelated float ambiguity estimates.

**Proof**

SBIE is optimal for very low precision of $N$ : as the integer grid gets very dense compared to the probability density of the float solution, the summation in (10) can be replaced by proper integration in the limit case (an infinite search space is assumed)

$$\breve{N}_{l,\text{SBIE}} = \int_{\mathbb{R}} z w_z\left(\hat{N}_{l|\mathcal{L}}\right) \mathrm{d}z = \hat{N}_{l|\mathcal{L}}, \tag{21}$$

which is equal to the conditioned float solution $\hat{N}_{l|\mathcal{L}}$, as $\int_{\mathbb{R}} w_z\left(\hat{N}_{l|\mathcal{L}}\right)dz = 1$ by definition and $w_z\left(\hat{N}_{l|\mathcal{L}}\right)$ is symmetric with respect to $\hat{N}_{l|\mathcal{L}}$. Together with (9) follows

$$\breve{N}_{l,\mathrm{SBIE}} = \hat{N}_l, \quad \forall l \in \{1,\dots,n\}, \tag{22}$$

which concludes the proof, as the float solution is optimal.

**Proof**

SBIE is optimal for very high precision of $N$ : according to (5), the weighting coefficients $w_z\left(\hat{N}_{l|\mathcal{L}}\right)$ for (10) are given by (again assuming an infinite search space)

$$w_z\left(\hat{N}_{l|\mathcal{L}}\right) = \frac{\exp\left(-\dfrac{1}{2\sigma^2_{\hat{N}_{l|\mathcal{L}}}}\,|\,z - \hat{N}_{l|\mathcal{L}}\,|^2\right)}{\displaystyle\sum_{z'\in\mathbb{Z}}\exp\left(-\dfrac{1}{2\sigma^2_{\hat{N}_{l|\mathcal{L}}}}\,|\,z' - \hat{N}_{l|\mathcal{L}}\,|^2\right)}$$

$$= \frac{1}{1 + \displaystyle\sum_{\substack{z'\in\mathbb{Z}\\z'\neq z}}\exp\left(-\dfrac{1}{2\sigma^2_{\hat{N}_{l|\mathcal{L}}}}\left(|\,z' - \hat{N}_{l|\mathcal{L}}\,|^2 - |\,z - \hat{N}_{l|\mathcal{L}}\,|^2\right)\right)}. \tag{23}$$

Let the rounding operator be denoted by $[\cdot]$. From (23) it follows, that

$$\lim_{\sigma_{\hat{N}_{l|\mathcal{L}}}\to 0} w_{\left[\hat{N}_{l|\mathcal{L}}\right]}\left(\hat{N}_{l|\mathcal{L}}\right) = 1, \tag{24}$$

as $\left|\left[\hat{N}_{l|\mathcal{L}}\right] - \hat{N}_{l|\mathcal{L}}\right|^2 \leq |\,z' - \hat{N}_{l|\mathcal{L}}\,|^2, \ \forall z' \in \mathbb{Z}\setminus\left[\hat{N}_{l|\mathcal{L}}\right].$ As a consequence of $\sum_{z\in\mathbb{Z}} w_z\left(\hat{N}_{l|\mathcal{L}}\right) = 1$,

$$\lim_{\sigma_{\hat{N}_{l|\mathcal{L}}}\to 0} w_z\left(\hat{N}_{l|\mathcal{L}}\right) = 0, \quad \forall z \in \mathbb{Z}\setminus\left[\hat{N}_{l|\mathcal{L}}\right]. \tag{25}$$

Inserting (24) and (25) in (10) proves the equivalence of SBIE and conditional rounding (i.e., BS) for the high precision regime, which is optimal there.

**References:**

[1] C. Günther and P. Henkel. Integer Ambiguity Estimation for Satellite Navigation. IEEE Transactions on Signal Processing, 60(7):3387--3393, 2012.

[2] J. F. Zumberge and M. B. Heflin and D. C. Jefferson and M. M. Watkins and F. H. Webb. Precise point positioning for the efficient and robust analysis of GPS data from large networks. J. Geophys. Res., 102:5005--5018, 1997.

[3] P. De Jonge and C. Tiberius. The LAMBDA method for integer ambiguity estimation: implementation aspects. Delft Geodetic Computing Centre LGR Series, 12, 1996.

[4] P. Henkel. Reliable Carrier Phase Positioning. Dissertation, Technische Universität München, 2010.

[5] P. Henkel and C. Günther. Reliable Integer Ambiguity Resolution with MultiFrequency Code Carrier Linear Combinations. Journal of Global Positioning Systems, 9(2):90--103, 2010.

[6] P. J. G. Teunissen. GNSS ambiguity bootstrapping: Theory and application. Proceedings of Int. Symp. on Kinematic Systems in Geodesy, Geomatics and Navigation, pages 246--254, Banff, Canada, 2001.

[7] P. J. G. Teunissen. GNSS Best Integer Equivariant Estimation. A Window on the Future of Geodesy in International Association of Geodesy Symposia, pages 422-427. 2005.

[8] P. J. G. Teunissen. Integer aperture GNSS ambiguity resolution. Artificial Satellites, 38(3):79--88, 2003.

[9] P. J. G. Teunissen. On the Computation of the Best Integer Equivariant Estimator. Artificial Satellites, 40(3):161--171, 2005.

[10] P. J. G. Teunissen. The least-squares ambiguity decorrelation adjustment: a method for fast GPS integer ambiguity estimation. Journal of Geodesy, 70:65--82, 1995.

[11] P. J. G. Teunissen. Theory of integer equivariant estimation with application to GNSS. Journal of Geodesy, 77:402-410, 2003.

[12] P. J. G. Teunissen. Towards a unified theory of GNSS ambiguity resolution. Journal of Global Positioning Systems, 2(1):1--12, 2003.

[13] S. Verhagen. The GNSS integer ambiguities: estimation and validation. Dissertation, Technische Universiteit Delft, 2004.

[14] S. Verhagen and P. J. G. Teunissen. Performance comparison of the BIE estimator with the float and fixed GNSS ambiguity estimators. A Window on the Future of Geodesy in International Association of Geodesy Symposia, pages 428-433. 2005.

[15] Zhibo Wen and Patrick Henkel and Andreas Brack and Christoph Günther. Satellite Bias Determination with Global Station Network and Best Integer-Equivariant Estimation. Proceedings of the ION GNSS International Technical Meeting 2012, Nashville, Tennessee, US, 2012.

[16] Z. Wen, P. Henkel, M. Davaine, and C. Günther, Satellite Phase and Code Bias Estimation with Cascaded Kalman Filter, in Proceedings of European Navigation Conference (ENC), London, U.K., 2011.

[17] P. Henkel, Z. Wen, and C. Günther, Estimation of satellite and receiver biases on multiple Galileo frequencies with a Kalman filter, in Proceedings of the ION ITM 2010, 2010, pp. 1067-1074.

[18] A. E. Niell, Global mapping functions for the atmosphere delay at radio wavelengths, Journal of Geophysical Research, vol. 101, no. B2, pp. 3227-3246, Feb. 1996.

## Claims

1. A method for determining at least one real-valued parameter, in particular an absolute or relative position of a receiver (7, 10), by means of a satellite navigation system (1) comprising a plurality of satellites (2), which emit navigation signals (4) on carrier signals (5), the method comprising the steps:

- phase measurements (12) on the carriers (5) of the navigation signals (4) are performed,
- a real-valued float solution for the at least one real-valued parameter and for phase ambiguities of the phase measurements and a corresponding covariance matrix are determined,
- a sequential resolution of the phase ambiguities is performed, wherein a particular ambiguity to be resolved is mapped on a fixed ambiguity in dependency of the previously fixed ambiguities, and
- the float solution of the at least one real-valued parameter is adjusted to the fixed ambiguities,

**characterized in that**

- the mapping of a particular ambiguity to be resolved to the fixed ambiguity is performed by setting the fixed ambiguity equal to a weighted sum of integer candidates for the particular ambiguity, that
- the integer candidates are selected from a one-dimensional range around the float solution for the particular ambiguity, and that
- the weighting coefficients are proportional to the values of a probability distribution of the float solution for the particular ambiguity at the locations of the integer candidates.

2. The method according to Claim 1,

- wherein the inverted covariance matrix is decomposed into a product of a triangular matrix, a diagonal matrix and the transposed triangular matrix, and
- wherein the diagonal matrix and the triangular matrix are used for a sequential resolution of the phase ambiguities.

3. The method according to Claim 1 or 2, wherein code measurements on the navigation signal (4) are performed besides the phase measurements on the carriers (5) of the navigation signals (4) and wherein the code measurements and phase measurements are used for determining the real-valued float solution for the at least one real-valued parameter and for the phase ambiguities.

4. The method according to any one of Claims 1 to 3, wherein the float solution for the at least one real-valued parameter and for the phase ambiguities is determined by a least-square method and/or a recursive state estimator (15) applied to measurements of different epochs.

5. The method according to any one of Claims 1 to 4, wherein the at least one real-valued parameter is the actual absolute or relative position of a navigation device and/or wherein the float solution includes a real-valued solution for instrumental biases of the code measurements and/or phase measurements, and/or environmental errors.

6. The method according to any one of Claims 1 to 5, wherein the number of unknown parameter to be determined is reduced by mapping (13) a selection of the unknown parameters to the parameters of the float solution before the float solution is determined.

7. The method according to any one of Claims 1 to 6, wherein the float solution of the particular ambiguity to be resolved is conditioned (21) in dependency of the previously resolved ambiguities.

8. The method according to Claim 7, wherein the conditioning (21) is performed by projecting the differences between the previously resolved ambiguities and the float solution of the previously resolved ambiguities in the space of the particular ambiguity to be resolved, by summing up the contribution of each individual projections, and by correcting the float solution for the ambiguity to be resolved by the resulting sum.

9. The method according to any one of Claims 1 to 8, wherein the one-dimensional range and the probability distribution is centered on the conditioned float solution of the particular ambiguity to be resolved, and wherein the width of the probability distribution depends on the variance of the conditioned float solution to be resolved.

10. The method according to any one of Claims 1 to 9, wherein the boundaries of the one-dimensional range depend on the variance of the conditioned float solution of the particular ambiguity to be resolved.

11. The method according to any one of Claims 1 to 10,
wherein an integer decorrelation (19) is performed by a integer preserving transformation of the ambiguities, before the phase ambiguities are sequentially resolved (20, 21), and
wherein the integer preserving inverse transformation (22) is applied to the resolved ambiguities.

12. The method according to any one of Claims 1 to 11,
wherein the phase ambiguities to be resolved are sorted according to their respectively associated variances, which depend on the variances of the float solutions for the phase ambiguity, and wherein the phase ambiguities are resolved proceeding from a ambiguity having a smaller associated variance to a ambiguity having a bigger associated variance.

13. The method according to any one of Claims 1 to 12,
wherein the float solution of the at least one real-valued parameter is adjusted (22) by correcting the float solution of the at least one real-valued parameter by a projection of the fixed ambiguities in the space of the at least one real-valued parameter.

14. A network of reference stations (6) connected to a central processing unit (8), the reference station (6) being provided with receivers (7) for measuring navigation signals emitted by satellites (2) of satellite navigation system (1),
**characterized in that**
the central processing unit (8) is arranged for performing a method according to any one of claims 1 to 13.

15. A mobile navigation device (9) having a receiver (10) for measuring navigation signals emitted by satellites (2) of satellite navigation system (1) and having a central processing unit (11),
**characterized in that**
the central processing unit (11) is arranged for performing a method according to any one of claims 1 to 13.

## Patentansprüche

1. Verfahren zum Bestimmen wenigstens eines reellwertigen Parameters, insbesondere einer absoluten oder relativen Position eines Empfängers (7, 10) mittels eines Satellitennavigationssystems (1) mit einer Vielzahl von Satelliten (2), die Navigationssignale (4) auf Trägersignalen (5) emittieren, wobei das Verfahren die Verfahrensschritte umfasst:

- an den Trägern (5) der Navigationssignale (4) werden Phasenmessungen (12) ausgeführt,
- eine reellwertige Gleitkommalösung für den wenigstens einen reellwertigen Parameter und für die Phasenmehrdeutigkeiten der Phasenmessungen und eine entsprechende Kovarianzmatrix werden bestimmt,
- eine sequenzielle Auflösung der Phasenmehrdeutigkeiten wird ausgeführt, wobei eine jeweils aufzulösende Mehrdeutigkeit auf eine festgelegte Mehrdeutigkeit in Abhängigkeit von den zuvor festgelegten Mehrdeutigkeiten abgebildet wird, und
- die Gleitkommalösung des wenigstens einen reellwertigen Parameters wird an die festgelegten Mehrdeutigkeiten angepasst,

**dadurch gekennzeichnet, dass**

- die Abbildung einer jeweils aufzulösenden Mehrdeutigkeit auf die festgelegte Mehrdeutigkeit ausgeführt wird, indem die festgelegte Mehrdeutigkeit gleich der gewichteten Summe von ganzzahligen Kandidaten für die jeweilige Mehrdeutigkeit gesetzt wird, dass
- die ganzzahligen Kandidaten aus einem eindimensionalen Bereich um die Gleitkommalösung für die jeweilige Mehrdeutigkeit ausgewählt werden, und dass
- die Gewichtskoeffizienten proportional zu den Werten einer Wahrscheinlichkeitsverteilung der Gleitkommalösung für die jeweilige Mehrdeutigkeit sind.

2. Verfahren nach Anspruch 1,

- bei dem die invertierte Kovarianzmatrix in ein Produkt einer Dreiecksmatrix, einer diagonalen Matrix und der transponierten Dreiecksmatrix zerlegt wird, und

- bei dem die Diagonalmatrix und die Dreiecksmatrix für eine sequenzielle Auflösung der Phasenmehrdeutigkeiten verwendet werden.

3. Verfahren nach Anspruch 1 oder 2,
bei dem an den Navigationssignalen (4) Codemessungen neben den Phasenmessungen an den Trägern (5) des Navigationssignals (4) ausgeführt werden und bei dem die Codemessungen und Phasenmessungen dazu verwendet werden, die reellwertige Gleitkommalösung für den wenigstens einen reellwertigen Parameter und für die Phasenmehrdeutigkeiten zu bestimmen.

4. Verfahren nach einem der Ansprüche 1 bis 3,
bei dem die Gleitkommalösung für den wenigstens einen reellwertigen Parameter und die Phasenmehrdeutigkeiten durch ein Verfahren der kleinsten Quadrate und/oder einen rekursiven Zustandsschätzer (15) bestimmt wird, der auf Messungen verschiedener Epochen angewendet wird.

5. Verfahren nach einem der Ansprüche 1 bis 4,
bei dem der wenigstens eine reellwertige Parameter die aktuelle absolute oder relative Position eines Navigationsgeräts ist und/oder bei dem die Gleitkommalösung eine reellwertige Lösung für die systematischen Instrumentenfehler der Codemessungen und/oder Phasenmessungen und/oder die Umgebungsfehler umfasst.

6. Verfahren nach einem der Ansprüche 1 bis 5,
bei dem die Anzahl der unbekannten zu bestimmenden Parametern verringert wird, indem eine Auswahl der unbekannten Parameter auf die Parameter der Gleitkommalösung abgebildet (13) werden, bevor die Gleitkommalösung bestimmt wird.

7. Verfahren nach einem der Ansprüche 1 bis 6,
bei dem die Gleitkommalösung der jeweils aufzulösenden Mehrdeutigkeit in Abhängigkeit von den zuvor aufgelösten Mehrdeutigkeiten aufbereitet (21) wird.

8. Verfahren nach Anspruch 7,
bei dem die Aufbereitung (21) ausgeführt wird, indem die Differenzen zwischen den zuvor aufgelösten Mehrdeutigkeiten und den Gleitkommalösungen der zuvor aufgelösten Mehrdeutigkeiten in den Raum der jeweils aufzulösenden Mehrdeutigkeit projiziert werden, indem die Beiträge jeder einzelnen Projektion aufaddiert werden und indem die Gleitkommalösung der aufzulösenden Mehrdeutigkeit durch die sich ergebende Summe korrigiert wird.

9. Verfahren nach einem der Ansprüche 1 bis 8,
bei dem der eindimensionale Bereich und die Wahrscheinlichkeitsverteilung auf die aufbereitete Gleitkommalösung der jeweils aufzulösenden Mehrdeutigkeit zentriert werden, und bei dem die Breite der Wahrscheinlichkeitsverteilung von der Varianz der aufbereiteten aufzulösenden Gleitkommalösung abhängt.

10. Verfahren nach einem der Ansprüche 1 bis 9,
bei dem die Grenzen des eindimensionalen Bereichs von der Varianz der aufbereiteten Gleitkommalösung der jeweils aufzulösenden Mehrdeutigkeit abhängen.

11. Verfahren nach einem der Ansprüche 1 bis 10,
bei dem eine ganzzahlige Dekorrelation (19) durch eine die Ganzzahligkeit erhaltende Transformation der Mehrdeutigkeiten ausgeführt wird, bevor die Phasenmehrdeutigkeiten sequenziell aufgelöst (20, 21) werden, und bei dem die inverse die Ganzzahligkeit erhaltende Transformation (22) auf die aufgelösten Mehrdeutigkeiten angewendet wird.

12. Verfahren nach einem der Ansprüche 1 bis 11,
bei dem die aufzulösenden Phasenmehrdeutigkeiten entsprechend ihrer jeweils zugehörigen Varianzen sortiert werden, die von den Varianzen der Gleitkommalösungen der Phasenmehrdeutigkeiten abhängen, und bei dem die Phasenmehrdeutigkeiten ausgehend von einer Mehrdeutigkeit mit einer kleineren zugehörigen Varianz zu einer Mehrdeutigkeit mit einer größeren zugehörigen Varianz aufgelöst werden.

13. Verfahren nach einem der Ansprüche 1 bis 12,
bei dem die Gleitkommalösung des wenigstens einen reellwertigen Parameters angepasst (22) wird, indem die Gleitkommalösung des wenigstens einen reellwertigen Parameters durch eine Projektion der festgelegten Mehrdeutigkeiten in den Raum des wenigstens einen reellwertigen Parameters korrigiert werden.

**14.** Netzwerk von Referenzstationen (6), die mit einer zentralen Verarbeitungseinheit (8) verbunden sind, wobei die Referenzstation (6) mit Empfängern (7) versehen sind, um Navigationssignale zu messen, die von Satelliten (2) des Satellitennavigationssystems (1) emittiert sind,
**dadurch gekennzeichnet, dass**
die zentrale Verarbeitungseinheit (8) dazu eingerichtet ist, ein Verfahren nach einem der Ansprüche 1 bis 13 auszuführen.

**15.** Mobiles Navigationsgerät (9) mit einem Empfänger (10) zur Messung von Navigationssignalen, die von Satelliten (2) eines Satellitennavigationssystems (1) emittiert sind, und mit einer zentralen Verarbeitungseinheit (11),
**dadurch gekennzeichnet, dass**
die zentrale Verarbeitungseinheit (11) dazu eingerichtet ist, ein Verfahren nach einem der Ansprüche 1 bis 13 auszuführen.

## Revendications

**1.** Un procédé de détermination d'au moins un paramètre à valeur réelle, plus particulièrement une position relative ou absolue d'un récepteur (7, 10) au moyen d'un système de navigation par satellite (1) comprenant une pluralité de satellites (2) qui émettent des signaux de navigation (4) sur des signaux de porteuse (5), le procédé comprenant les opérations suivantes :

- des mesures de phase (12) sur les porteuses (5) des signaux de navigation (4) sont exécutées,
- une solution flottante à valeur réelle pour le au moins un paramètre à valeur réelle et pour des ambiguïtés de phase des mesures de phase et une matrice de covariance correspondante sont déterminées,
- une résolution séquentielle des ambiguïtés de phase est exécutée, dans laquelle une ambiguïté particulière à résoudre est mise en correspondance avec une ambiguïté fixe en fonction des ambiguïtés fixes antérieures, et
- la solution flottante du au moins un paramètre à valeur réelle est ajustée sur les ambiguïtés fixes,

**caractérisé en ce que**

- la mise en correspondance d'une ambiguïté particulière à résoudre avec l'ambiguïté fixe est exécutée par la définition de l'ambiguïté fixe égale à une somme pondérée de candidats entiers pour l'ambiguïté particulière,
**en ce que**
- les candidats entiers sont sélectionnés à partir d'une plage unidimensionnelle autour de la solution flottante pour l'ambiguïté particulière, et **en ce que**
- les coefficients pondérés sont proportionnels aux valeurs d'une distribution de probabilités de la solution flottante pour l'ambiguïté particulière aux emplacements des candidats entiers.

**2.** Le procédé selon la Revendication 1,

- dans lequel la matrice de covariance inversée est décomposée en un produit d'une matrice triangulaire, d'une matrice diagonale et de la matrice triangulaire transposée, et
- dans lequel la matrice diagonale et la matrice triangulaire sont utilisées pour une résolution séquentielle des ambiguïtés de phase.

**3.** Le procédé selon la Revendication 1 ou 2,
dans lequel des mesures de code sur le signal de navigation (4) sont exécutées en plus des mesures de phase sur les porteuses (5) des signaux de navigation (4) et dans lequel les mesures de code et les mesures de phase sont utilisées de façon à déterminer la solution flottante à valeur réelle pour le au moins un paramètre à valeur réelle et pour les ambiguïtés de phase.

**4.** Le procédé selon l'une quelconque des Revendications 1 à 3,
dans lequel la solution flottante pour le au moins un paramètre à valeur réelle et pour les ambiguïtés de phase est déterminée par un procédé des moindres carrés et/ou un estimateur d'état récursif (15) appliqué à des mesures d'époques différentes.

**5.** Le procédé selon l'une quelconque des Revendications 1 à 4,
dans lequel le au moins un paramètre à valeur réelle est la position relative ou absolue réelle d'un dispositif de navigation et/ou dans lequel la solution flottante comprend une solution à valeur réelle pour des erreurs systématiques d'instruments des mesures de code et/ou des mesures de phase, et/ou des erreurs environnementales.

**6.** Le procédé selon l'une quelconque des Revendications 1 à 5,
dans lequel le nombre de paramètres inconnus à déterminer est réduit par la mise en correspondance (13) d'une sélection des paramètres inconnus avec les paramètres de la solution flottante avant que la solution flottante ne soit déterminée.

**7.** Le procédé selon l'une quelconque des Revendications 1 à 6,
dans lequel la solution flottante de l'ambiguïté particulière à résoudre est conditionnée (21) en fonction des ambiguïtés résolues antérieurement.

**8.** Le procédé selon la Revendication 7,
dans lequel le conditionnement (21) est exécuté par la projection des différences entre les ambiguïtés résolues antérieurement et la solution flottante des ambiguïtés résolues antérieurement dans l'espace de l'ambiguïté particulière à résoudre, par l'addition de la contribution de chaque projection individuelle et par la correction de la solution flottante pour l'ambiguïté à résoudre au moyen de la somme résultante.

**9.** Le procédé selon l'une quelconque des Revendications 1 à 8,
dans lequel la plage unidimensionnelle et la distribution de probabilités sont centrées sur la solution flottante conditionnée de l'ambiguïté particulière à résoudre, et dans lequel la largeur de la distribution de probabilités dépend de la variance de la solution flottante conditionnée à résoudre.

**10.** Le procédé selon l'une quelconque des Revendications 1 à 9,
dans lequel les limites de la plage unidimensionnelle dépendent de la variance de la solution flottante conditionnée de l'ambiguïté particulière à résoudre.

**11.** Le procédé selon l'une quelconque des Revendications 1 à 10,
dans lequel une décorrélation d'entiers (19) est exécutée par une transformation de préservation des entiers des ambiguïtés, avant que les ambiguïtés de phase ne soient résolues séquentiellement (20, 21), et dans lequel transformation inverse de préservation des entiers (22) est appliquée aux ambiguïtés résolues.

**12.** Le procédé selon l'une quelconque des Revendications 1 à 11,
dans lequel les ambiguïtés de phase à résoudre sont triées en fonction de leurs variances respectivement associées, qui dépendent des variances des solutions flottantes pour l'ambiguïté de phase, et dans lequel les ambiguïtés de phase sont résolues en partant d'une ambiguïté possédant une variance associée plus petite vers une ambiguïté possédant une variance associée plus grande.

**13.** Le procédé selon l'une quelconque des Revendications 1 à 12,
dans lequel la solution flottante du au moins un paramètre à valeur réelle est ajustée (22) par la correction de la solution flottante du au moins un paramètre à valeur réelle par une projection des ambiguïtés fixes dans l'espace du au moins un paramètre à valeur réelle.

**14.** Un réseau de stations de référence (6) raccordées à une unité de traitement centrale (8), les stations de référence (6) étant équipées de récepteurs (7) destinés à la mesure de signaux de navigation émis par des satellites (2) d'un système de navigation par satellite (1),
**caractérisé en ce que**
l'unité de traitement centrale (8) est agencée de façon à exécuter un procédé selon l'une quelconque des Revendications 1 à 13.

**15.** Un dispositif de navigation mobile (9) possédant un récepteur (10) destiné à la mesure de signaux de navigation émis par des satellites (2) d'un système de navigation par satellite (1) et possédant une unité de traitement centrale (11),
**caractérisé en ce que**
l'unité de traitement centrale (11) est agencée de façon à exécuter un procédé selon l'une quelconque des Revendications 1 à 13.

FIG 1

# FIG 2

```
        ┌──────────────────┐
        │   Measurement    │──── 12
        └──────────────────┘
                 │
                 ▼
        ┌──────────────────┐
        │     Mapping      │──── 13
        └──────────────────┘
                 │
                 ▼
        ┌──────────────────┐
        │ Initial Estimation │──── 14
        └──────────────────┘
```

Recursive State Estimator ── 15

16

```
        ┌──────────────────┐
        │    Prediction    │
        └──────────────────┘
                 │
                 ▼
        ┌──────────────────┐
        │     Update       │──── 17
        └──────────────────┘
```

Sequential BIE Estimator ── 18

```
        ┌──────────────────┐
        │ Integer Decorrelation │──── 19
        └──────────────────┘
                 │
                 ▼
        ┌──────────┐
        │  j = 1   │
        └──────────┘
                 │
                 ▼
        ┌──────────────────┐
        │  One-Dimensional │
        │  BIE Estimation of │──── 20
        │  j-th Ambiguity  │
        └──────────────────┘
                 │
                 ▼
        ┌──────────────────┐      ┌────────┐
        │  Conditioning of │      │  j++   │
        │    Ambiguity     │── 21 └────────┘
        └──────────────────┘
                 │
                 ▼
             ◇ j+1 ◇
                 │
                 ▼
        ┌──────────────────┐
        │  Inverse Integer │
        │   Decorrelation  │──── 22
        └──────────────────┘
                 │
                 ▼
        ┌──────────────────┐
        │ Estimation of Real │──── 23
        │    Parameters    │
        └──────────────────┘
```

FIG 3

$$\hat{N}_{l|\text{L}} - ds_{\hat{N}_{l|\text{L}}} \qquad \hat{N}_{l|\text{L}} \qquad \hat{N}_{l|\text{L}} + ds_{\hat{N}_{l|\text{L}}}$$

FIG 4

$$\hat{N}_{l|\text{L}} - ds_{\hat{N}_{l|\text{L}}} \qquad \hat{N}_{l|\text{L}} \qquad \hat{N}_{l|\text{L}} + ds_{\hat{N}_{l|\text{L}}}$$

## FIG 5

MSE$_{\{F,BS,ILS,SBIE,BIE\}}(t)$ vs Epoch $t$ [s]

Legend: Float, BS, ILS, SBIE, BIE

## FIG 6

SDT$_{\{F,BS,ILS,SBIE,BIE\}}(t)$ vs Epoch $t$ [s]

Legend: Float, BS, SBIE

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **C. GÜNTHER ; P. HENKEL.** Integer Ambiguity Estimation for Satellite Navigation. *IEEE Transactions on Signal Processing,* 2012, vol. 60 (7), 3387-3393
- **J. F. ZUMBERGE ; M. B. HEFLIN ; D. C. JEFFERSON ; M. M. WATKINS ; F. H. WEBB.** Precise point positioning for the efficient and robust analysis of GPS data from large networks. *J. Geophys. Res.,* 1997, vol. 102, 5005-5018
- **P. DE JONGE ; C. TIBERIUS.** The LAMBDA method for integer ambiguity estimation: implementation aspects. *Delft Geodetic Computing Centre LGR Series,* 1996, vol. 12
- **P. HENKEL.** Reliable Carrier Phase Positioning. Dissertation, Technische Universität München, 2010
- **P. HENKEL ; C. GÜNTHER.** Reliable Integer Ambiguity Resolution with MultiFrequency Code Carrier Linear Combinations. *Journal of Global Positioning Systems,* 2010, vol. 9 (2), 90-103
- **P. J. G. TEUNISSEN.** GNSS ambiguity bootstrapping: Theory and application. *Proceedings of Int. Symp. on Kinematic Systems in Geodesy, Geomatics and Navigation,* 2001, 246-254
- GNSS Best Integer Equivariant Estimation. **P. J. G. TEUNISSEN.** A Window on the Future of Geodesy. International Association of Geodesy Symposia, 2005, 422-427
- **P. J. G. TEUNISSEN.** Integer aperture GNSS ambiguity resolution. *Artificial Satellites,* 2003, vol. 38 (3), 79-88
- **P. J. G. TEUNISSEN.** On the Computation of the Best Integer Equivariant Estimator. *Artificial Satellites,* 2005, vol. 40 (3), 161-171

- **P. J. G. TEUNISSEN.** The least-squares ambiguity decorrelation adjustment: a method for fast GPS integer ambiguity estimation. *Journal of Geodesy,* 1995, vol. 70, 65-82
- **P. J. G. TEUNISSEN.** Theory of integer equivariant estimation with application to GNSS. *Journal of Geodesy,* 2003, vol. 77, 402-410
- **P. J. G. TEUNISSEN.** Towards a unified theory of GNSS ambiguity resolution. *Journal of Global Positioning Systems,* 2003, vol. 2 (1), 1-12
- **S. VERHAGEN.** The GNSS integer ambiguities: estimation and validation. Dissertation, Technische Universiteit Delft, 2004
- Performance comparison of the BIE estimator with the float and fixed GNSS ambiguity estimators. **S. VERHAGEN ; P. J. G. TEUNISSEN.** A Window on the Future of Geodesy. International Association of Geodesy Symposia, 2005, 428-433
- **ZHIBO WEN ; PATRICK HENKEL ; ANDREAS BRACK ; CHRISTOPH GÜNTHER.** Satellite Bias Determination with Global Station Network and Best Integer-Equivariant Estimation. *Proceedings of the ION GNSS International Technical Meeting 2012,* 2012
- **Z. WEN ; P. HENKEL ; M. DAVAINE ; C. GÜNTHER.** Satellite Phase and Code Bias Estimation with Cascaded Kalman Filter. *Proceedings of European Navigation Conference (ENC),* 2011
- **P. HENKEL ; Z. WEN ; C. GÜNTHER.** Estimation of satellite and receiver biases on multiple Galileo frequencies with a Kalman filter. *Proceedings of the ION ITM,* 2010, vol. 2010, 1067-1074
- **A. E. NIELL.** Global mapping functions for the atmosphere delay at radio wavelengths. *Journal of Geophysical Research,* February 1996, vol. 101 (B2), 3227-3246